# FASCICULE DE BREVET EUROPEEN

(11) **EP 1 925 827 B1**
(45) Date de publication et mention de la délivrance du brevet: **04.09.2013**
(21) Numéro de dépôt: 07291365.0
(22) Date de dépôt: 15.11.2007
(51) Int. Cl.: F16B 7/18, B25J 15/00, B62D 65/00

(54) **Dispositif modulaire de maintien rigide**
Modulvorrichtung zur stabilen Aufbewahrung
Modular rigid support device

(30) Priorité: 22.11.2006 FR 0610242
(43) Date de publication de la demande: 28.05.2008
(73) Titulaire: Genus Technologies, 91570 BIEVRES (FR)
(72) Inventeur: Morel, Michel Gérard Charles, 95120 Ermont (FR); Roudier, Fabrice Jean-Claude Rachel, 78820 Juziers (FR)
(74) Mandataire: Kaspar, Jean-Georges

(56) Documents cités:
- EP-A- 1 617 087
- DE-U1- 20 012 779
- DE-U1- 29 611 887

## Description

L'invention est relative à un dispositif modulaire de maintien rigide, notamment pour saisir et positionner une pièce de carrosserie automobile, ce dispositif pouvant par exemple être monté sur un bras de robot.

L'invention est également applicable à un dispositif modulaire de maintien rigide, notamment d'au moins une pièce de carrosserie automobile, par exemple pour des opérations de « géométrie au sol ».

On connaît des dispositifs de préhension, notamment des dispositifs fabriqués et commercialisés par la société FTS de droit français, qui présentent une structure réalisée par assemblage tridimensionnel d'éléments individuels raccordés par des brides de fixation.

On connaît également des dispositifs de préhension comportant une partie centrale tubulaire sur laquelle sont montés des colliers coulissants réglables.

Dans ces deux types de dispositifs connus, les bras montés sur la structure centrale ne sont pas positionnés avec la précision souhaitée et présentent les inconvénients d'une inertie insuffisante conduisant à une flexion excessive des extrémités, et d'une rigidité insuffisante.

Le document EP1216798 A1 décrit un dispositif de préhension, destiné à être monté sur un bras de robot, comportant une poutre centrale présentant de bonnes caractéristiques d'inertie en flexion et en torsion, et au moins un bras solidarisé à la poutre de manière détachable et destiné à supporter un organe de positionnement, de maintien ou de serrage d'une pièce de carrosserie automobile. La poutre est creuse, de manière à alléger la poutre centrale tout en conservant de bonnes caractéristiques d'inertie en flexion et en torsion. Chaque bras comporte une conformation d'indexation le long de la poutre et des moyens de fixation à la poutre. La poutre centrale porte d'un côté opposé à la bride de montage au bras de robot une pluralité de conformations d'indexation régulièrement réparties. La poutre centrale et chaque bras sont assemblés par application de deux dièdres rectangulaires indexés l'un par rapport à l'autre par des conformations d'indexation coopérantes. Les conformations d'indexation comprennent au moins un tenon et au moins une mortaise sensiblement en forme de prisme droit, de préférence sensiblement parallélépipédiques. Chaque bras comporte à son extrémité opposée à la poutre centrale des moyens de fixation pour fixer un organe de positionnement, de maintien ou de serrage d'une pièce de carrosserie automobile. Chaque bras comporte une section rétrécie permettant la rupture du bras en cas de choc sur un obstacle ou de contrainte mécanique trop importante. Chaque bras est réversible, de manière à limiter le nombre de bras. Le dispositif comporte au moins une nourrice pneumatique comportant une pluralité de conduites tubulaires alimentées par un distributeur, solidarisée de préférence à la poutre centrale.

Le dispositif de préhension décrit dans le document EP1216798 A1 présente cependant des inconvénients ou des insuffisances en ce qui concerne : le principe d'assemblage modulaire, la diversité trop importante des éléments et les possibilités réduites de construction ; la précision du positionnement de ses éléments et la rigidité des liaisons entre les éléments ; l'interchangeabilité des éléments et leur facilité de remplacement.

Document EP 1617087 A1, qui est considéré comme l'état de la technique le plus pertinent, divulgue un dispositif modulaire de maintien rigide, conforme le préambule de la revendication 1.

L'invention a pour but de remédier aux inconvénients précités, en proposant un nouveau dispositif modulaire de maintien rigide, comportant notamment un nombre réduit d'éléments modulaires pouvant être assemblés avec précision, de sorte que l'assemblage réalisé présente une bonne rigidité et une précision satisfaisante du positionnement de ses éléments.

L'invention a pour objet un dispositif modulaire de maintien rigide, notamment pour saisir et positionner une pièce de carrosserie automobile, comportant une partie centrale creuse présentant de bonnes caractéristiques d'inertie en flexion et en torsion, et au moins un bras solidarisé à la partie de manière détachable et destiné à supporter un organe de positionnement, de maintien ou de serrage d'une pièce de carrosserie automobile ; dans lequel chaque bras comporte une conformation d'indexation le long de la partie centrale et des moyens de fixation à la partie centrale, caractérisé en ce que la partie centrale creuse porte une pluralité de rainures réparties, pour y insérer des lardons ou conformations de fixation de bras.

Selon d'autres caractéristiques alternatives de l'invention :
- la partie centrale creuse est entièrement circulaire et symétrique dans tous les plans.
- la partie centrale creuse porte une pluralité de conformations d'indexation longitudinale régulièrement réparties sur toute sa périphérie.
- ladite pluralité de rainures comporte une pluralité de rainures longitudinales régulièrement réparties sur toute sa périphérie et sur toute sa longueur, de manière à pouvoir y insérer des lardons de fixation.
- la partie centrale creuse porte une pluralité de conformations d'indexation radiale régulièrement réparties sur toute sa périphérie.
- la partie centrale creuse peut porter une pluralité de rainures d'indexation radiale régulièrement réparties sur toute sa périphérie.
- la partie centrale creuse peut porter une pluralité de nervures d'indexation radiale régulièrement réparties sur toute sa périphérie.
- chaque bras asymétrique et réversible porte au moins deux conformations d'indexation radiale.
- chaque bras asymétrique et réversible porte au moins deux logements pour des conformations amovibles d'indexation radiale
- les conformations amovibles d'indexation radiale sont des clavettes asymétriques et réversibles.
- la partie centrale creuse est entièrement circulaire et symétrique dans tous les plans.

L'invention sera mieux comprise grâce à la description qui va suivre donnée à titre d'exemple non limitatif en référence aux dessins annexés dans lesquels :

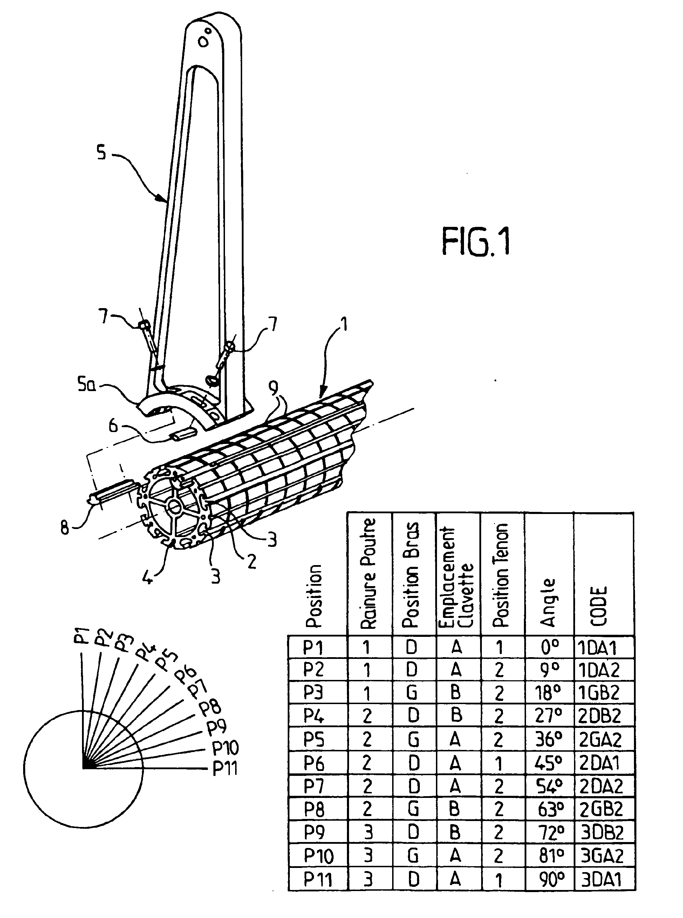

La figure 1 représente schématiquement un diagramme explicatif avec vue en perspective éclatée de la partie centrale d'un premier mode de réalisation de dispositif selon l'invention, d'un bras modulaire détachable d'un premier mode de réalisation de dispositif selon l'invention et des accessoires de positionnement et d'assemblage d'un premier mode de réalisation de dispositif selon l'invention.

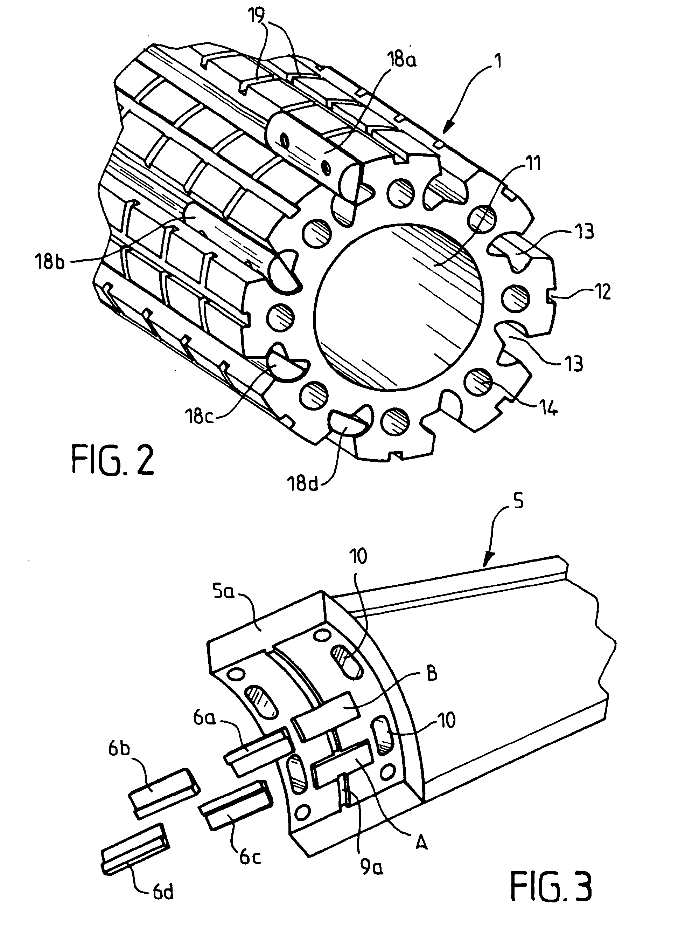

La figure 2 représente schématiquement une vue partielle en perspective d'une partie centrale d'un autre premier mode de réalisation de dispositif selon l'invention montrant quatre phases successives de montage d'accessoires d'assemblage.
La figure 3 représente schématiquement une vue partielle en perspective d'un mode de réalisation de bras de premier mode de réalisation de dispositif selon l'invention montrant quatre possibilités de montage de quatre accessoires de positionnement.

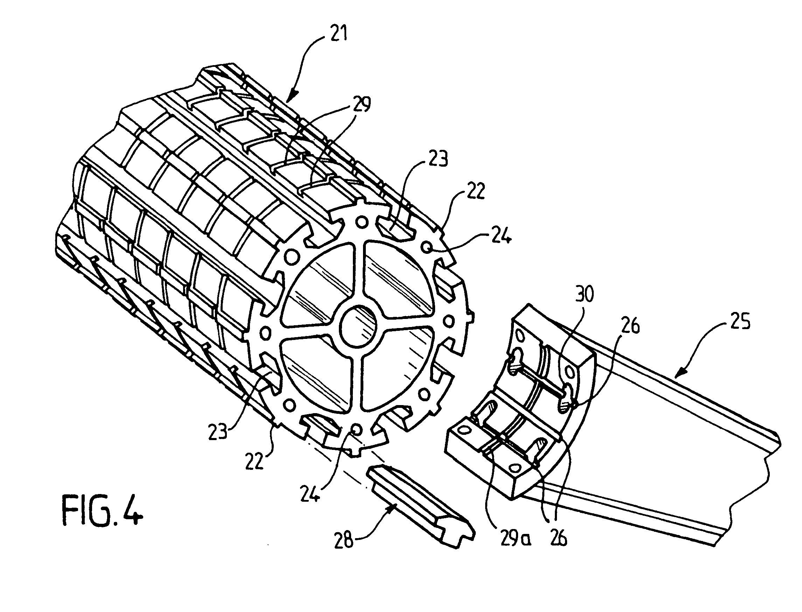

La figure 4 représente schématiquement une vue en perspective éclatée de la partie centrale d'un deuxième mode de réalisation de dispositif selon l'invention, d'un bras modulaire détachable d'un deuxième mode de réalisation de dispositif selon l'invention et des accessoires d'assemblage d'un deuxième mode de réalisation de dispositif selon l'invention.

En référence à la figure 1, un dispositif selon l'invention comporte une partie centrale 1 creuse vue en perspective, apte à être solidarisée à l'extrémité d'un bras de robot au moyen d'une bride de fixation non représentée.

Cette partie centrale 1 creuse présente un évidement en son centre. Cette partie centrale 1 creuse est entièrement circulaire et symétrique dans tous les plans.

Cette partie centrale 1 creuse est de préférence réalisée en aluminium, ou en alliage d'aluminium par un procédé de mise en forme à chaud ou à froid.

Un procédé avantageux de mise en forme à chaud ou à froid est le procédé de filage, dans lequel un piston exerce une pression sur un lopin d'aluminium placé dans un conteneur et expulsé à travers une filière donnant au produit la forme souhaitée.

Ce procédé de filage assure une mise en forme rapide du produit, évite des usinages importants, utilise moins de matière première et réduit le coût matière et le coût de fabrication.

Cependant, ce procédé de filage économiquement rentable impose de prévoir des épaisseurs de matière sensiblement constantes et une masse linéaire du produit inférieure à vingt kilogrammes par mètre.

A cet effet, la partie centrale 1 creuse, qui est l'élément principal, sur lequel toutes les autres pièces viennent se fixer, comporte huit rainures longitudinales 2 de clavette et huit rainures longitudinales 3 pour lardons sur toute sa longueur.

La partie centrale 1 creuse, qui est l'élément principal, sur lequel toutes les autres pièces viennent se fixer, comporte également à chaque extrémité huit trous 4 ou taraudages de fixation.

Ces huit trous 4 ou taraudages de fixation sont régulièrement répartis concentriquement à l'axe principal de la partie centrale 1.

Les huit rainures longitudinales 2 de clavette sont usinées avec un pas régulier sur toute la périphérie de la partie centrale 1 creuse afin de positionner les bras 5 selon un pas régulier.

Chaque bras 5 est conçu de façon asymétrique avec une embase 5a comportant deux emplacements ou logements A ou B pour une clavette asymétrique 6.

Le positionnement longitudinal des bras 5 est obtenu par des rainures longitudinales 9 usinées à intervalles réguliers dans la partie centrale 1 sur toute sa longueur, et leur fixation est réalisée par serrage des vis 7 coopérant avec les lardons taraudés 8.

Le positionnement angulaire des bras 5 est obtenu par insertion d'une clavette asymétrique 6 dans un logements A ou B et engagement sur une des rainures longitudinales 2 usinées ou brochées sur la périphérie de la partie centrale 1.

Le choix d'une partie centrale 1 de forme cylindrique permet ainsi un placement régulier et homogène des bras 5.

Dans un premier mode de réalisation de dispositif selon l'invention, les rainures longitudinales 3 pour les lardons 8 assurant les fixations des bras 5 sont placées régulièrement tous les 45 degrés d'angle ; et les rainures longitudinales 2 usinées ou brochées sur la périphérie de la partie centrale 1 destinées à recevoir une clavette 6 sont décalées régulièrement tous les 45 degrés d'angle.

Les deux logements A ou B pour clavette asymétrique 6 sont décalés avec un angle de 9 degrés d'angle, pour obtenir une position de montage symétrique des bras 5 et pour augmenter leur nombre de positions.

En outre, en utilisant une clavette asymétrique 6 pour augmenter le nombre de positions des bras 5 et en combinant tous ces paramètres avec la symétrie du bras 5, on peut placer celui ci en utilisant la même rainure 2 de clavette sur la partie centrale 1 selon cinq positions décalées entre elle de 9 degrés d'angle.

Ainsi, le dispositif modulaire selon l'invention fournit un nouveau maillage illustré par un diagramme explicatif, qui représente uniquement, par souci de clarté, les points pouvant être atteints sur un quart de partie centrale 1.

Mais le nouveau maillage fourni par le dispositif modulaire selon l'invention s'étend bien entendu sur 360 degrés d'angle, en permettant d'atteindre quarante points différents sur une section transversale de partie centrale 1 avec un seul modèle de bras.

La finesse du nouveau maillage est de 94 millimètres entre deux points consécutifs en bout d'un bras de longueur 600 mm.

La répartition du nouveau maillage est uniforme et la couverture par section transversale est totale, sans nécessiter aucune pièce complémentaire.

En combinant les paramètres suivants (et les codages correspondants) :
- le sens Droit ou Gauche du bras (codage : D ou G),
- l'emplacement de la clavette dans le logement A ou le logement B (codage : A ou B),
- la position du tenon de clavette (codage : 1 ou 2),
- le numéro de la rainure de la partie centrale (codage : 1 ou 2 ou 3, ...),
le nouveau maillage fournit les positions P1 à P11 atteintes par les bras sur un quart de la périphérie de la partie centrale 1.

Le tableau ci-dessous résume les codages de ces positions P1 à P11, dont l'obtention est illustrée par le diagramme explicatif de la figure 1.

| **Position** | **Code** |
|---|---|
| P1 | 1DA1 |
| P2 | 1DA2 |
| P3 | 1GB2 |
| P4 | 2DB2 |
| P5 | 2GA2 |
| P6 | 2DA1 |
| P7 | 2DA2 |
| P8 | 2GB2 |
| P9 | 3DB2 |
| P10 | 3GA2 |
| P11 | 3DA1 |

Dans un cas d'application dit de "soudage à poste fixe", qui est le cas le plus courant, le dispositif modulaire selon l'invention est monté sur un robot et est utilisé avec une pince à souder à poste fixe. Le dispositif selon l'invention présente ainsi les pièces devant une pince à souder, laquelle assemble ces pièces par des points de soudure.

Dans un cas d'application dit de "géométrie au sol ", des éléments modulaires sont utilisés par des outillages robotisés. Ces éléments sont fixés au sol par l'intermédiaire d'un socle rigide. La pièce est contenue par le dispositif modulaire selon l'invention, pendant que les opérations sur la pièce sont effectuées par des robots.

En référence à la figure 2, un autre dispositif selon l'invention comporte une partie centrale 11 creuse vue en perspective, apte à être solidarisée à l'extrémité d'un bras de robot au moyen d'une bride de fixation non représentée.

Cette partie centrale 11 creuse présente un évidement en son centre. Cette partie centrale 11 creuse est entièrement circulaire et symétrique dans tous les plans.

La partie centrale 11 creuse, qui est l'élément principal, sur lequel toutes les autres pièces viennent se fixer, comporte huit rainures longitudinales 12 de clavette et huit rainures longitudinales 13 pour lardons 18 sur toute sa longueur.

La partie centrale 11 creuse, qui est l'élément principal, sur lequel toutes les autres pièces viennent se fixer, comporte également à chaque extrémité huit trous 14 ou taraudages de fixation.

Ces huit trous 14 ou taraudages de fixation sont régulièrement répartis concentriquement à l'axe principal de la partie centrale 11.

Le positionnement longitudinal des bras est obtenu par des rainures longitudinales 19 usinées à intervalles réguliers dans la partie centrale 11 sur toute sa longueur, et leur fixation est réalisée par serrage des vis non représentées coopérant avec les lardons taraudés 18.

Les lardons 18 permettent de fixer des bras sur la partie centrale 11

A cet effet, on utilise généralement deux lardons 18 par bras à fixer.

Les lardons 18 sont de préférence réalisés en aluminium, ou en alliage d'aluminium afin de réduire le poids et d'éviter le matage des faces en contact avec la partie centrale 1 lors du serrage et lors des cas de charge. Selon les efforts mécaniques subis, des lardons en acier peuvent éventuellement être utilisés.

Les lardons 18 sont des éléments hémicylindriques, taraudés pour recevoir chacun deux filets rapportés ou « Helicoil » (marque déposée), ce qui évite ainsi de tarauder la partie centrale 11 sur toute la longueur et son pourtour et ce qui évite ainsi de l'affaiblir.

La longueur des lardons 18 est avantageusement égale ou supérieure à celle de l'embase du bras à fixer afin de mieux répartir les efforts.

Les huit rainures longitudinales 13 pour les lardons 18 sont conformées de manière à pouvoir insérer un lardon 18 sans passer par les extrémités de la partie centrale 11.

Cette disposition autorise un changement de bras ou un rajout de bras sans démontage des lardons 18 déjà installés, en procurant ainsi un gain de temps considérable, lors d'une intervention sur site par exemple.

Cette disposition géométrique des rainures longitudinales 13 participe à l'insertion et au positionnement du lardon 18 et renforce la résistance de la poutre en torsion.

Une conformation géométrique des rainures longitudinales 13 en cylindres de base incluant deux tiers de disque permet l'insertion par glissement du lardon 18a jusqu'à une position correspondant à la position du lardon 18b inséré au fond de la rainure 13.

Après insertion à fond par glissement d'un lardon jusqu'à une position correspondant à la position du lardon 18b, une rotation du lardon 18c autour de l'arête rentrante de la rainure 13 est effectuée jusqu'à une position finale correspondant à la position du lardon 18d.

Dans cette position finale du lardon 18d, les deux taraudages ou filets rapportés sont orientés radialement en attente de coopération avec des vis non représentées.

En référence à la figure 3, une clavette bloquant le bras 5 en rotation peut être insérée dans l'un des deux logements A ou B du bras 5.

La forme asymétrique de cette clavette unique permet de positionner angulairement le bras de différentes manières correspondant aux clavettes 6a, 6b, 6c, 6d orientées face aux deux logements identiques A ou B du bras 5.

Les clavettes 6 sont de préférence réalisés en aluminium, ou en alliage d'aluminium afin de réduire le poids et d'éviter le matage des faces en contact avec la partie centrale 1 lors du serrage. Selon les efforts mécaniques subis, des clavettes 6 en acier peuvent éventuellement être utilisés.

Les clavettes 6 sont montées avec un ajustement serré dans le bras 5 et sont ainsi solidarisées à ce dernier.

Des passages 10 de vis encadrant un des deux logements A ou B du bras 5 sont prévus dans l'embase 5a du bras 5 pour les vis de fixation 7.

Les bras 5 sont des éléments porteurs de longueurs et d'angles différents qui permettent d'atteindre les points dans l'espace où l'on veut positionner ou serrer la tôle à manipuler.

L'embase 5a du bras 5 est usinée selon des formes coopérantes, c'est-à-dire présentent chacun au moins une nervure centrale 9a d'indexage sur une rainure longitudinale 9 de la partie centrale 1.

En référence à la figure 4, un deuxième mode de réalisation de dispositif selon l'invention peut comporter des accessoires de montage non représentés pour monter différents accessoires d'appareils de type connu en soi au bout des bras du dispositif.

Le deuxième mode de réalisation de dispositif selon l'invention comporte une partie centrale 21 creuse vue en perspective, qui présente un évidement en son centre.

Cette partie centrale 21 creuse est entièrement circulaire et symétrique dans tous les plans.

Cette partie centrale 21 creuse est de préférence réalisée en aluminium, ou en alliage d'aluminium par un procédé de mise en forme à chaud ou à froid.

Un procédé avantageux de mise en forme à chaud ou à froid est le procédé de filage, dans lequel un piston exerce une pression sur un lopin d'aluminium placé dans un conteneur et expulsé à travers une filière donnant au produit la forme souhaitée.

Ce procédé de filage assure une mise en forme rapide du produit, évite des usinages importants, utilise moins de matière première et réduit le coût matière et le coût de fabrication.

Cependant, ce procédé de filage économiquement rentable impose de prévoir des épaisseurs de matière sensiblement constantes et une masse linéaire du produit inférieure à vingt kilogrammes par mètre.

A cet effet, la partie centrale 21 creuse, qui est l'élément principal, sur lequel toutes les autres pièces viennent se fixer, comporte huit nervures longitudinales 22 et huit rainures longitudinales 23 pour lardons sur toute sa longueur.

La partie centrale 21 creuse, qui est l'élément principal, sur lequel toutes les autres pièces viennent se fixer, comporte également à chaque extrémité huit trous 24 ou taraudages de fixation.

Ces huit trous 24 ou taraudages de fixation sont régulièrement répartis concentriquement à l'axe principal de la partie centrale 21.

Les huit nervures longitudinales 22 sont usinées avec un pas régulier sur toute la périphérie de la partie centrale 21 creuse afin de positionner des bras 25 selon un pas régulier.

Chaque bras 25 est conçu de façon asymétrique avec une embase 25a comportant trois rainures 26 complémentaires d'une nervure 22.

Le positionnement longitudinal des bras 25 est obtenu par des rainures longitudinales 29 usinées à intervalles réguliers dans la partie centrale 21 sur toute sa longueur, et leur fixation est réalisée par serrage des vis coopérant avec des lardons taraudés 28.

Le positionnement angulaire des bras 25 est obtenu par engagement sur une des nervures longitudinales 22 usinées ou brochées sur la périphérie de la partie centrale 21.

Le choix d'une partie centrale 21 de forme cylindrique permet ainsi un placement régulier et homogène des bras 25.

Dans ce deuxième mode de réalisation de dispositif selon l'invention, les rainures longitudinales 23 pour les lardons 28 assurant les fixations des bras 25 sont placées régulièrement tous les 45 degrés d'angle ; et les nervures longitudinales 22 sur la périphérie de la partie centrale 21 destinées à recevoir une rainure 26 complémentaire sont décalées régulièrement tous les 45 degrés d'angle.

Les rainures 26 complémentaires sont décalées, pour obtenir une position de montage symétrique des bras 25 et pour augmenter leur nombre de positions.

Des passages 30 de vis encadrant une des rainures 26 complémentaires du bras 5 sont prévus dans l'embase du bras 25 pour les vis de fixation 27.

Les bras 25 sont des éléments porteurs de longueurs et d'angles différents qui permettent d'atteindre les points dans l'espace où l'on veut positionner ou serrer la tôle à manipuler.

Un avantage de l'évidement d'une partie centrale 21 de forme cylindrique est de permettre le passage de conduites électriques ou de canalisations pneumatiques ou hydrauliques de puissance ou de transfert de signaux de commande ou de position : ce passage s'effectue de manière sûre, car les conduites ou canalisations sont entourées et protégées par les parois de la partie centrale 21.

En outre cette disposition permet de réduire l'encombrement extérieur du dispositif selon l'invention.

L'invention décrite en référence à plusieurs modes de réalisation n'y est nullement limitée, mais couvre au contraire toute modification de forme et toute variante de réalisation dans le cadre et l'esprit de l'invention.

Ainsi, dans le cas d'un dispositif selon l'invention pour serrages pneumatiques, on peut avantageusement monter une ou deux nourrices pneumatiques comportant une pluralité de conduites tubulaires alimentées par un distributeur au moyen de tuyauteries souples dans l'intérieur creux d'une partie centrale. La nourrice alimentée sous pression permet également dans cette variante de distribuer l'air comprimé à des serrages pneumatiques, en évitant un enchevêtrement de conduits pneumatiques.

L'essentiel est que la structure du dispositif selon l'invention comporte une partie centrale allongée présentant une bonne inertie en torsion et en flexion, et que le mode de fixation retenu permette d'atteindre un volume spatial important avec un nombre faible de bras, de manière à réduire les stocks de bras nécessaires pour la mise en oeuvre de l'invention.

## Revendications

1. Dispositif modulaire de maintien rigide, notamment pour saisir et positionner une pièce de carrosserie automobile, comportant une partie centrale (1, 11, 21) creuse, et au moins un bras (5, 25) solidarisé à la partie de manière détachable et destiné à supporter un organe de positionnement, de maintien ou de serrage d'une pièce de carrosserie automobile, dans lequel chaque bras (5, 25) comporte une conformation d'indexation le long de la partie centrale (1, 11, 21) et des moyens de fixation à la partie centrale (1, 11, 21), dans lequel la partie centrale (1, 11, 21) creuse porte une pluralité de rainures (3, 13, 23) réparties, pour y insérer des conformations (18 and) de fixation de bras, caractérisé en combinaison par le fait que le dispositif comporte des clavettes (6a-6d) de positionnement montées dans des rainures (2) de clavette ou des nervures (22) pour positionner un bras (5,25), par le fait que chaque bras (5, 25) comporte au moins un emplacement ou logement (A, B) de clavette (6), et par le fait que la partie centrale creuse porte des conformations (18 and) de fixation de bras taraudées et recevant des filets rapportés.

2. Dispositif selon la revendication 1, **caractérisé par le fait que** la partie centrale (1, 11, 21) creuse est réalisée par filage et est conformée pour le montage de conduites, tuyauteries, conduits ou analogue dans son intérieur creux.

3. Dispositif selon la revendication 1 ou la revendication 2, **caractérisé en ce que** la partie centrale (1, 11, 21) creuse porte une pluralité de conformations (9, 19, 29) d'indexation longitudinale régulièrement réparties sur toute sa périphérie.

4. Dispositif selon la revendication 1 où la revendication 2, **caractérisé en ce que** ladite partie centrale (1, 11, 21) creuse porte une pluralité de rainures longitudinales (3, 13, 23) régulièrement réparties sur toute sa périphérie et sur toute sa longueur, de manière à pouvoir y insérer des lardons de fixation.

5. Dispositif selon la revendication 1, **caractérisé en ce que** ladite pluralité de rainures (3, 23, 23) comporte une pluralité de rainures (2, 12) d'indexation radiale régulièrement réparties sur toute sa périphérie.

6. Dispositif selon la revendication 1, **caractérisé en ce que** la partie centrale (1, 11, 21) creuse est entièrement circulaire et symétrique dans tous les plans.

7. Dispositif selon l'une quelconque des revendications précédentes, **caractérisé en ce que** chaque bras (5, 25) asymétrique et réversible porte au moins deux conformations (6a-6d, 26) d'indexation radiale.

8. Dispositif selon la revendication 7, **caractérisé en ce que** chaque bras (5) asymétrique et réversible porte au moins deux logements (A, B) pour des conformations (6a-6d) amovibles d'indexation radiale.

9. Dispositif selon la revendication 8, **caractérisé en ce que** les conformations (6a-6d) amovibles d'indexation radiale sont des clavettes (6a, 6d) asymétriques et réversibles.

10. Dispositif selon la revendication 4, **caractérisé en ce que** les rainures longitudinales (13) sont conformées de manière à pouvoir y insérer une conformation de fixation ou lardon (18) sans passer par les extrémités de la partie centrale (11).

## Patentansprüche

1. Modulare Vorrichtung zum stabilen Halten, insbesondere, um ein Kraftfahrzeug-Karosserieteil zu erfassen und zu positionieren, die einen hohlen zentralen Abschnitt (1, 11, 21) und mindestens einen mit dem Abschnitt lösbar verbundenen Arm (5, 25) umfasst, der dazu bestimmt ist, ein Positionierungs-, Halte- oder Spannorgan eines Kraftfahrzeug-Karosserieteils zu tragen, wobei jeder Arm (5, 25) eine Indexierungsausbildung entlang des zentralen Abschnitts (1, 11, 21) und Befestigungsmittel am zentralen Abschnitt (1, 11, 21) aufweist, wobei der hohle zentrale Abschnitt (1, 11, 21) eine Vielzahl von verteilten Rillen (3, 13, 23) trägt, um dort Armbefestigungsausbildungen (18 a-d) einzufügen, gekennzeichnet in Kombination dadurch, dass die Vorrichtung Positionierungskeile (6a-6d) aufweist, die in Keilrillen (2) oder Rippen (22) montiert sind, um einen Arm (5, 25) zu positionieren, dadurch, dass jeder Arm (5, 25) mindestens eine Stelle oder Aufnahme (A, B) eines Keils (6) aufweist und dadurch, dass der hohle zentrale Abschnitt Armbefestigungsausbildungen (18 a-d) mit Gewinde aufweist, die aufgesetzte Einsätze aufnehmen.

2. Vorrichtung nach Anspruch 1, **dadurch gekennzeichnet, dass** der hohle zentrale Abschnitt (1, 11, 21) durch Strangpressen hergestellt ist und für die Montage von Kanälen, Rohren, Leitungen und ähnlichem in seinem hohlen Inneren ausgebildet ist.

3. Vorrichtung nach Anspruch 1 oder Anspruch 2, **dadurch gekennzeichnet, dass** der hohle zentrale Abschnitt (1, 11 21) eine Vielzahl von Längsindexierungs-Ausbildungen (9, 19, 29) trägt, die über seinen gesamten Umfang gleichmäßig verteilt sind.

4. Vorrichtung nach Anspruch 1 oder Anspruch 2, **dadurch gekennzeichnet, dass** der hohle zentrale Abschnitt (1, 11, 21) eine Vielzahl von Längsrillen (3, 12, 23) trägt, die über seinen gesamten Umfang und über seine gesamte Länge gleichmäßig verteilt sind, um dort Befestigungsleisten einsetzen zu können.

5. Vorrichtung nach Anspruch 1, **dadurch gekennzeichnet, dass** die Vielzahl von Rillen (3, 23, 23) eine Vielzahl radialer Indexierungsrillen (2, 12) aufweist, die über ihren gesamten Umfang gleichmäßig verteilt sind.

6. Vorrichtung nach Anspruch 1, **dadurch gekennzeichnet, dass** der hohle zentrale Abschnitt (1, 11, 21) in allen Ebenen vollkommen rund und symmetrisch ist.

7. Vorrichtung nach einem der vorangehenden Abschnitte, **dadurch gekennzeichnet, dass** jeder asymmetrische und reversible Arm (5, 25) mindestens zwei radiale Indexierungsausbildungen (6a-6d, 26) trägt.

8. Vorrichtung nach Anspruch 7, **dadurch gekennzeichnet, dass** jeder asymmetrische und reversible Arm (5) mindestens zwei Aufnahmen (A, B) für lösbare radiale Indexierungsausbildungen (6a-6d) trägt.

9. Vorrichtung nach Anspruch 8, **dadurch gekennzeichnet, dass** die lösbaren radialen Indexierungsausbildungen (6a, 6d) asymmetrische und reversible Keile (6a, 6d) sind.

10. Vorrichtung nach Anspruch 4, **dadurch gekennzeichnet, dass** die Längsrillen (13) derart ausgebildet sind, dass dort eine Befestigungsausbildung oder ein Streifen (18) ohne Führung durch die Enden des zentralen Abschnitts (11) einsetzbar ist.

## Claims

1. A modular rigid support device, in particular for grasping and positioning a motor vehicle body part, including a hollow central portion (1, 11, 21), and at least one bar (5, 25), detachably secured to the part and designed to support a member for positioning, supporting or gripping a motor vehicle body part, wherein each bar (5, 25) has an indexing structure along the central portion (1, 11, 21) and fastening means to the central portion (1, 11, 21), in which the hollow central portion (1, 11, 21) bears a plurality of distributed slots (3, 13, 23), so as to insert structures (18a-d) for fastening bars therein, **characterized in** combination **in that** the device includes positioning keys (6a-6d) mounted in key slots (2) or ribs (22) to position a bar (5, 25), **in that** each bar (5, 25) includes at least one location or housing (A, B) for a key (6), and **in that** the hollow central portion bears tapped bar fixation structures (18a-18d) receiving attached threads.

2. The device according to claim 1, **characterized in that** the hollow central portion (1, 11, 21) is made by extrusion and is configured for mounting ducts, pipes, conduits or similar members in its hollow inside.

3. The device according to claim 1 or claim 2, **characterized in that** the hollow central portion (1, 11, 21) bears a plurality of longitudinal indexing structures (9, 19, 29) regularly distributed on its entire periphery.

4. The device according to claim 1 or claim 2, **characterized in that** said hollow central portion (1, 11, 21) bears a plurality of longitudinal slots (3, 13, 23) regularly distributed over its entire periphery and over its entire length, so as to be able to insert fixation strips therein.

5. The device according to claim 1, **characterized in that** said plurality of slots (3, 23, 23) includes a plurality of radial indexing slots (2, 12) regularly distributed over its entire periphery.

6. The device according to claim 1, **characterized in that** the hollow central portion (1, 11, 21) is completely circular and symmetrical in all planes.

7. The device according to any one of the preceding claims, **characterized in that** each asymmetrical and reversible bar (5, 25) bears at least two radial indexing structures (6a-6d, 26).

8. The device according to claim 7, **characterized in that** each asymmetrical and reversible bar (5) bears at least two housings (A, B) for removable radial indexing structures (6a-6d).

9. The device according to claim 8, **characterized in that** the removable radial indexing structures (6a-6d) are asymmetrical and reversible keys (6a, 6d).

10. The device according to claim 4, **characterized in that** the longitudinal slots (13) are configured so as to be able to insert a fixation structure or strip (18) without passing through the ends of the central portion (11).
